# FASCICULE DE BREVET EUROPEEN

(11) **EP 1 834 111 B1**
(45) Date de publication et mention de la délivrance du brevet: **16.05.2012**
(21) Numéro de dépôt: 06709390.6
(22) Date de dépôt: 03.01.2006
(51) Int. Cl.: F16F 15/121, F16D 3/79

(54) **VOLANT D'INERTIE POUR MOTEUR A COMBUSTION INTERNE**
SCHWUNGRAD FÜR EINEN VERBRENNUNGSMOTOR
FLYWHEEL FOR INTERNAL COMBUSTION ENGINE

(30) Priorité: 03.01.2005 FR 0550013
(43) Date de publication de la demande: 19.09.2007
(73) Titulaire: Valeo Embrayages, 80009 Amiens (FR)
(72) Inventeur: VERHOOG, Roël, F-60190 Gournay Sur Aronde (FR); MAHE, Hervé, F-80000 Amiens (FR)
(74) Mandataire: Jeuland, Mickaël
(86) Numéro de dépôt international: PCT/FR2006/050002
(87) Numéro de publication internationale: WO 2006/072752

(56) Documents cités:
- DE-U- 7 435 748
- FR-A- 2 565 655
- US-A- 2 346 732
- US-A- 6 131 486

## Description

La présente invention concerne un volant d'inertie pour moteur à combustion interne, en particulier de véhicule automobile.

Il est connu d'utiliser un volant rigide présentant une inertie importante en rotation et fixé à l'extrémité d'un vilebrequin entre celui-ci et une transmission, pour l'entraînement des roues d'un véhicule notamment. Ce volant rigide a pour fonction de régulariser la vitesse de rotation du vilebrequin. Les combustions dans les cylindres du moteur génèrent une succession de pics de couple instantané que le volant d'inertie transforme en un couple moyen à oscillation fortement réduite de manière à diminuer les vibrations.

Ce volant d'inertie forme une masse fixée au vilebrequin qui possède une certaine raideur en flexion longitudinale, de sorte que l'ensemble vilebrequin-volant forme un système masse-ressort avec une fréquence propre d'oscillation. Pour modifier cette fréquence et réduire les contraintes de flexion dans le vilebrequin, il est connu d'utiliser un volant souple en flexion constitué d'une couronne d'inertie et d'un organe annulaire de liaison au vilebrequin ayant une certaine souplesse en flexion suivant un axe perpendiculaire à l'axe de rotation.

Un volant d'inertie de ce type est décrit dans le document FR-A-2849683. L'organe de liaison entre la couronne et le vilebrequin comprend au moins deux bras possédant des caractéristiques de flexion et est par exemple en tôle découpée. Ces bras ont une très forte raideur en torsion autour de l'axe de rotation, ce qui produit, suivant les conditions de fonctionnement du moteur, des contraintes en torsion importantes dans le vilebrequin, notamment pour les grandes vitesses de rotation.

Dans ce document et dans le document US-A-2,346,732 qui montre un volant avec les caractéristiques du préambule de la revendication 1, le volant d'inertie est fixé à l'organe de liaison en des points situés dans le prolongement des bras de l'organe de liaison.

On a également proposé d'ajouter des masselottes fixées par des ressorts au vilebrequin lui-même. Ces masselottes forment des batteurs oscillants qui par réaction peuvent réduire les contraintes en torsion dans le vilebrequin. Le montage de ces masselottes se traduit par un encombrement plus important et une complexité accrue.

La présente invention a notamment pour but d'éviter ces inconvénients et d'apporter une solution simple, efficace et économique au problème de la réduction des contraintes dans le vilebrequin.

Elle a en particulier pour objet un volant d'inertie ayant une certaine souplesse en torsion et réalisable de manière économique.

Elle propose à cet effet un volant d'inertie pour moteur à combustion interne, tel que défini par la revendication 1, comportant une masse annulaire d'inertie en rotation fixée à une extrémité du vilebrequin du moteur par une rondelle en tôle formée avec une série d'ouvertures réparties circonférentiellement et ayant une raideur en torsion inférieure à la raideur en torsion du vilebrequin seul, caractérisé en ce que la masse annulaire d'inertie en rotation est fixée à la rondelle en des zones situées sur les axes des ouvertures, entre chaque ouverture et la périphérie extérieure de la rondelle.

Un avantage majeur du volant d'inertie suivant l'invention est que cette souplesse en torsion de la rondelle permet de découpler une partie des vibrations en torsion transmises par le vilebrequin, le couple instantané produit par le vilebrequin ne s'appliquant plus directement à un volant rigide mais à un élément intermédiaire déformable en torsion, de sorte que les contraintes en torsion dans le vilebrequin dans certaines conditions de fonctionnement sont diminuées.

Un autre avantage de l'invention est que la fréquence propre en torsion du vilebrequin fixé au volant d'inertie peut être supérieure à la première fréquence générée par la succession des combustions dans les cylindres du moteur, et qu'il n'y a pas d'excitation de cette fréquence propre du vilebrequin par cette première fréquence.

Selon encore une autre caractéristique de l'invention, les ouvertures sont séparées circonférentiellement par des bras radiaux déformables en flexion dans un plan perpendiculaire à l'axe de rotation. Les zones de fixation de la masse d'inertie peuvent être situées au moins partiellement sur un rayon inférieur au plus grand rayon des bras.

Dans un mode de réalisation préféré de l'invention, la rondelle en tôle découpée comprend de 5 à 9 ouvertures et a une épaisseur comprise entre 2 et 6 mm, les bras ayant une largeur comprise entre 4 et 30 mm.

Selon une variante de réalisation, le volant d'inertie comprend un axe privilégié d'oscillation perpendiculaire à l'axe de rotation et positionné angulairement par rapport au vilebrequin, la rondelle ayant une raideur plus faible pour la flexion autour de cet axe.

Dans ce cas, le volant d'inertie peut comprendre deux bras doubles alignés suivant l'axe privilégié d'oscillation, et s'étendant de part d'autre de l'axe de rotation.

Ces bras doubles peuvent être séparés par une fente radiale ayant une dimension radiale sensiblement égale à celle des ouvertures.

Selon une variante de réalisation, la rondelle comporte des bras inclinés par rapport à une direction radiale, dans un plan perpendiculaire à l'axe de rotation. La plus grande longueur des bras qui résulte de leur inclinaison, diminue la raideur axiale et favorise un sens de torsion, ce qui permet de mieux filtrer des vibrations de torsion qui ne sont pas symétriques.

Avantageusement, le volant d'inertie comporte un moyen d'amortissement des vibrations en torsion et/ou en flexion. Ce moyen d'amortissement peut comprendre une rondelle Belleville précontrainte axialement entre la rondelle précitée et la masse d'inertie, ou bien en varianté des pattes découpées dans la tôle flexible de la rondelle précitée, s'étendant dans les ouvertures de cette tôle flexible et venant en appui sur la masse d'inertie, ou, dans une autre variante une rondelle solidaire de la rondelle précitée et comportant une série de pattes incurvées parallèlement à l'axe de rotation et venant en appui radial avec une précontrainte élastique sur la paroi cylindrique d'un alésage de la masse d'inertie.

Selon une caractéristique avantageuse de l'invention, la fréquence propre d'oscillation en torsion du vilebrequin en ordre de marche et fixé au volant d'inertie est supérieure à 300 Hz.

D'une manière générale, le volant d'inertie selon l'invention peut constituer un volant simple ou un volant primaire d'un double volant amortisseur. Il peut être monté sur un vilebrequin réalisé en fonte, moins onéreux qu'un vilebrequin en acier forgé.

L'invention sera mieux comprise et d'autres caractéristiques et avantages de celle-ci apparaîtront plus clairement à la lecture de la description détaillée ci-après donnée à titre d'exemple et faite en référence aux dessins annexés dans lesquels :
- la figure 1 est un schéma de principe d'un volant rigide monté en bout d'un vilebrequin ;
- la figure 2 est un schéma de principe d'un volant souple en flexion monté en bout d'un vilebrequin ;
- la figure 3 est un schéma de principe d'un volant souple en flexion et en torsion, monté en bout d'un vilebrequin ;
- la figure 4 est une vue en perspective d'un volant selon l'invention ;
- la figure 5 est une vue de face du moyen de liaison d'un volant selon une variante de réalisation de l'invention ;
- la figure 6 est une vue de face d'un volant selon une autre variante de réalisation de l'invention ;
- la figure 7 est une vue en coupe d'un volant souple en torsion comportant un moyen amortisseur ;
- la figure 8 est une vue en coupe selon la ligne A-A de la figure 9 d'un volant souple en torsion comportant un moyen amortisseur selon une variante ;
- la figure 9 est une vue de face du volant de la figure 8 ;
- la figure 10 est une vue en coupe d'un volant souple en torsion comportant un moyen amortisseur non conforme à l'invention ;
- la figure 11 est une vue en perspective de la rondelle d'amortissement du volant de la figure 10.

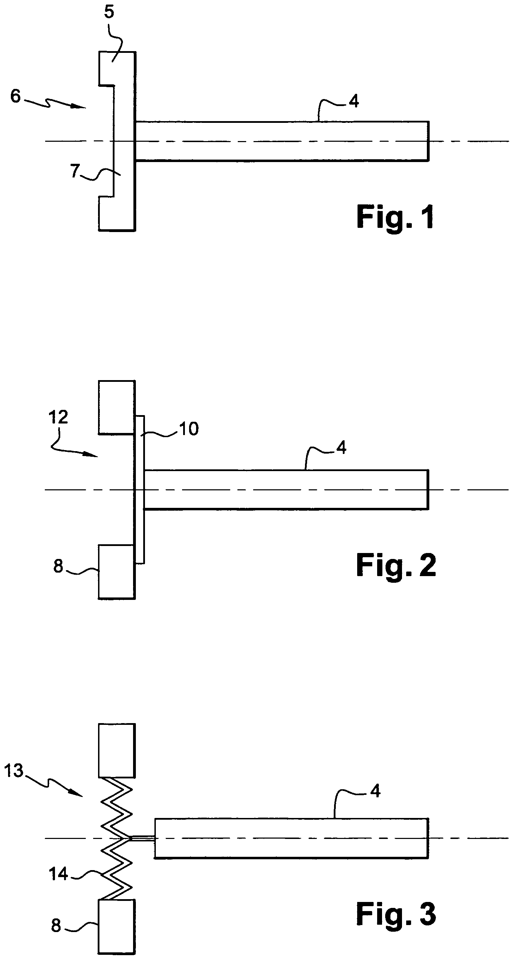

Le schéma de principe de la figure 1 représente un volant d'inertie rigide 6 réalisé habituellement en fonte et fixé à un vilebrequin 4 d'un moteur à combustion interne, en particulier de véhicule automobile. Ce volant comporte en général une partie radialement extérieure 5 de plus forte épaisseur apportant une inertie élevée, et un moyen de liaison 7 entre cette partie 5 et le vilebrequin 4. Ce moyen 7 est fixé sur une extrémité du vilebrequin 4 par des vis non représentées, disposées suivant un cercle centré sur l'axe de rotation.

Le schéma de principe de la figure 2 représente un volant d'inertie 12 souple en flexion qui est constitué d'une couronne 8 généralement en fonte, fixée sur la périphérie extérieure d'une tôle annulaire 10. Cette tôle 10, fixée au vilebrequin 4 par des vis, apporte au volant 12 une souplesse permettant une flexion autour d'un axe perpendiculaire à l'axe du vilebrequin, se traduisant par un mouvement de pompage, c'est-à-dire de déplacement du volant parallèlement à lui-même.

Le volant rigide 6 et le volant souple en flexion 12 ont une rigidité en torsion importante, en général supérieure à 5.10⁶ Nm/rad, et l'accélération angulaire de l'extrémité du vilebrequin 4 fixée au volant est pratiquement identique à celle du volant.

La figure 3 représente schématiquement un volant d'inertie 13 suivant l'invention, souple en flexion et en torsion. Il comprend une couronne d'inertie 8 fixée sur la périphérie extérieure d'un moyen de liaison 14 fixé comme précédemment au vilebrequin 4 par des vis et qui ajoute à la souplesse en flexion et en pompage du volant de la figure 2, une souplesse en torsion entre l'extrémité du vilebrequin 4 et la couronne d'inertie 8.

La raideur en torsion du vilebrequin est, pour un moteur à 4 cylindres en ligne, de l'ordre de 10⁵ à 10⁶ Nm/rad. Celle du volant 13 selon l'invention est de l'ordre de 10⁴ à 10⁵ Nm/rad et est au moins 10 fois plus faible que celle du vilebrequin. Le moyen de liaison 14 subit une déformation angulaire sous l'action d'un couple et l'accélération angulaire de l'extrémité du vilebrequin 4 diffère de celle de la couronne d'inertie 8.

En fonctionnement, les forces produites par les combustions dans les cylindres du moteur sont transmises aux manetons du vilebrequin par l'intermédiaire des pistons et des bielles et génèrent un couple oscillant d'entraînement transmis par le volant à la transmission du véhicule. Les pics de couple instantané au niveau du vilebrequin peuvent être quatre fois supérieurs au couple moyen. Dans le cas du volant rigide 6 de la figure 1, l'extrémité du vilebrequin 4 est liée à une inertie importante en rotation qui résiste et la contrainte maximale en torsion se situe dans cette extrémité du vilebrequin.

Dans le cas du volant souple en torsion 13 selon l'invention, l'extrémité du vilebrequin 4 est solidaire du moyen de liaison souple 14 qui se déforme en suivant le couple oscillant instantané. Ce moyen de liaison souple 14 a une raideur en torsion suivant l'axe du vilebrequin nettement plus faible que celle du vilebrequin 4 et va donc subir la plus grande déformation angulaire lors des pics de couple. En fonctionnement dynamique et selon la vitesse de rotation, on a pu constater que le vilebrequin subit moins de déformation angulaire, le couple dynamique ainsi que sa contrainte en torsion interne étant réduits.

Le moyen de liaison 14 a lui-même une raideur en torsion calculée de manière à ce que la fréquence propre en torsion du vilebrequin fixé au volant 13 et en ordre de marche soit fortement diminuée tout en restant supérieure à la première fréquence générée par la succession des combustions dans les cylindres du moteur. Dans le cas d'un moteur à combustion interne à quatre cylindres et d'un cycle à quatre temps, la première fréquence d'oscillation générée par les combustions est l'ordre 2. La fréquence propre de l'ensemble vilebrequin-volant doit rester supérieure à l'ordre 2 qui est par exemple de 200 Hz, pour une vitesse de rotation de 6000 tours/minute. Cette fréquence propre sera donc supérieure à 200 Hz, par exemple égale à 300 Hz pour bien se démarquer de la fréquence générée par les combustions.

Si un fort acyclisme est généré par l'ordre 4, ce qui peut être le cas pour ce moteur en version Diesel, la fréquence propre de l'ensemble vilebrequin-volant sera choisie supérieure à 330 Hz, par exemple égale à 500 Hz.

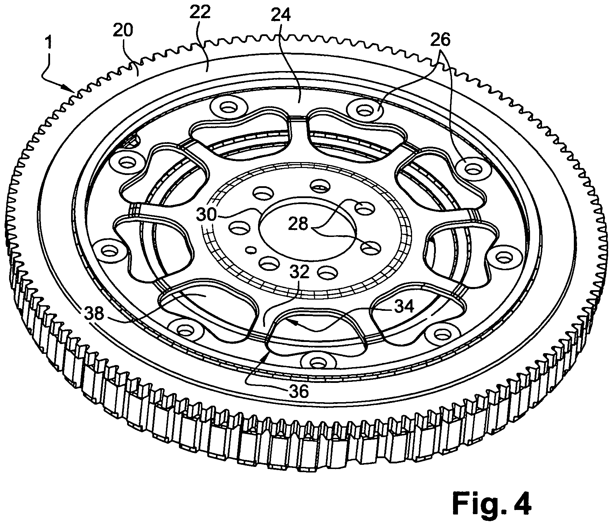

La figure 4 représente un mode de réalisation d'un volant 13 souple en torsion et en flexion selon l'invention. Ce volant 13 comporte une couronne d'inertie 22 en fonte ayant une épaisseur relativement importante sur sa partie radialement extérieure. Cette couronne se prolonge vers le centre par une partie d'épaisseur réduite visible sous une rondelle flexible 24 en tôle. La couronne d'inertie 22 comporte sur sa périphérie extérieure une couronne dentée 20 pour l'entraînement par le pignon d'un démarreur.

La rondelle flexible 24 est centrée et fixée de manière rigide sur la couronne d'inertie 22 par une succession de moyens de fixation 26 tels que des vis ou des rivets, régulièrement répartis sur la périphérie de la rondelle 24. La rondelle flexible 24 comporte un orifice central 30 entouré d'une succession de perçages 28 régulièrement répartis. La rondelle est centrée par l'orifice 30 coopérant avec un épaulement de l'extrémité du vilebrequin, et est fixée sur celui-ci par des vis passant dans les perçages 28.

La rondelle flexible 24 comporte dans sa partie médiane des ouvertures 38 identiques circonférentiellement réparties, séparées par des bras radiaux 32. Ces ouvertures ont globalement la forme d'un trapèze dont les côtés sont reliés entre eux par des rayons de raccordement 34, 36, la grande base du trapèze étant située du côté de la périphérie extérieure. Chaque moyen de fixation 26 de la couronne 22 est situé sur l'axe radial d'une ouverture 38, entre la grande base du trapèze et la périphérie extérieure de la rondelle 24. Cette grande base est incurvée vers le centre de la rondelle pour contourner le moyen de fixation 26 qui est situé au moins partiellement sur un rayon inférieur au plus grand rayon des bras 32.

Chaque bras radial 32 à bords sensiblement parallèles ou incurvés concaves comprend des extrémités élargies formées par les rayons de raccordement 34, 36 des ouvertures 38.

La rondelle flexible 24 peut être plane ou emboutie avec un léger relief, d'une manière connue en soi, pour répondre à des problèmes d'encombrement ou de rigidité.

Le fonctionnement du volant 13 selon l'invention est le suivant. La rondelle 24 est déformable en flexion suivant des axes situés dans un plan transversal. En effet, l'épaisseur réduite de cette rondelle 24 combinée avec les ouvertures 38 permet un mouvement de flexion de la couronne d'inertie 22 par rapport à l'extrémité du vilebrequin et un mouvement de pompage le long de l'axe de rotation. Pour ces mouvements, les bras 32 de la rondelle 24 fléchissent principalement suivant l'épaisseur. En première approche, en utilisant le calcul en flexion d'une poutre, l'épaisseur de la rondelle 24 intervient à la puissance trois et la largeur des bras à la puissance un, et c'est donc essentiellement l'épaisseur des bras qui détermine la raideur en flexion et en pompage du volant 13.

Les ouvertures 38 donnent également une souplesse en torsion à la rondelle 24 car les bras 32 fléchissent aussi suivant leur largeur et se déforment en « S » lors de la déformation en torsion de la rondelle 24 autour de l'axe de rotation. En première approche, la largeur des bras 32 intervient à la puissance trois et leur épaisseur à la puissance un, de sorte que c'est essentiellement la largeur des bras qui détermine la raideur en torsion du volant 13. Les rayons de raccordement 34, 36 des bras sont importants car ils permettent de définir des profils générant des contraintes sensiblement constantes dans les bras 32 lors des déformations en torsion.

La longueur des bras 32 intervient aussi dans les calculs de raideur en flexion et en torsion de la rondelle 24. Selon les principes de calcul exposés ci-dessus, l'épaisseur et la largeur des bras 32 constituent deux paramètres indépendants qui permettent de déterminer les deux raideurs de la rondelle 24 en flexion et en torsion, en fonction des valeurs théoriques visées.

De préférence, la rondelle 24 d'un volant 13 selon l'invention a une épaisseur de 2 à 6 mm et comprend 5 à 9 bras ayant une largeur de 4 à 30 mm. La longueur des bras est ajustable en modifiant la distance radiale minimum entre l'ouverture 38 et le contour extérieur de la tôle flexible 24 et elle est de préférence comprise entre 5 et 20 mm. Un exemple de calcul, pour une fréquence propre en torsion de 500 Hz d'un ensemble formé par un vilebrequin en ordre de marche fixé au volant 13 aboutit à 9 bras ayant une épaisseur de 4 mm, une largeur de 10 mm et une dimension radiale minimum de 15 mm.

Un avantage important du volant suivant l'invention est sa simplicité de réalisation car il ne nécessite aucune pièce supplémentaire par rapport au volant souple en flexion de la figure 2. La même rondelle en tôle remplit la fonction de liaison flexible, et avec les ouvertures additionnelles 38 découpées dispose également de la fonction souplesse en torsion.

Pour conserver une souplesse en flexion équivalente, compte tenu de la souplesse ajoutée par les ouvertures 38, l'épaisseur de la tôle est plus grande et passe par exemple de 2,5 mm à 4 ou 5 mm. Cette épaisseur plus grande est un avantage car elle permet dans certains cas d'éviter l'emploi d'une cale d'épaisseur habituellement interposée entre la rondelle 24 et les têtes des vis de fixation sur le vilebrequin quand l'épaisseur de la tôle est un peu faible pour assurer une bonne fixation des vis.

La réduction des contraintes, notamment de cisaillement, dans le vilebrequin apportée par le volant souple en torsion 13 selon l'invention permet pour un même vilebrequin d'augmenter les performances du moteur, ou permet à performances égales de simplifier la réalisation du vilebrequin, de l'alléger, ou d'utiliser une matière plus économique, par exemple la fonte au lieu d'un acier forgé. Lesdites contraintes peuvent être déterminées soit par calcul, soit en instrumentant le volant souple en torsion par des jauges de contraintes.

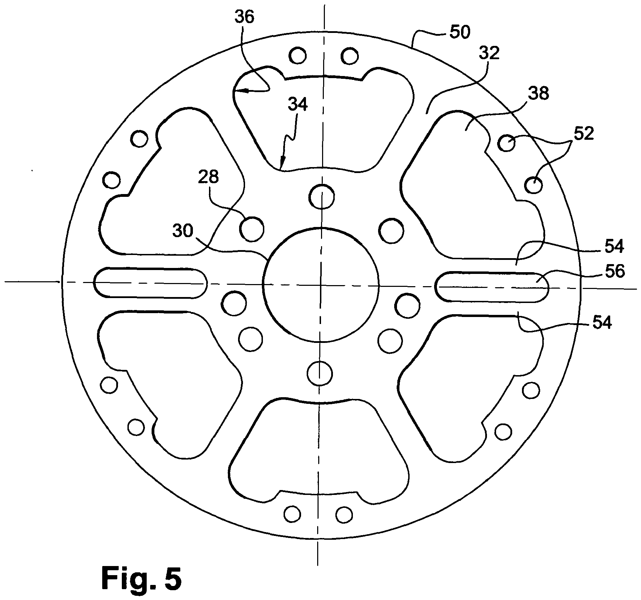

La figure 5 représente une variante de réalisation de la rondelle flexible. Comme dans la réalisation précédente, cette rondelle 50 comprend des ouvertures 38 séparées par des bras 32 à une branche, un orifice central 30 et des perçages 28 de passage des vis de fixations.

La périphérie extérieure de cette rondelle 50 comporte des perçages 52 pour la fixation d'une couronne d'inertie. Ces perçages 52 sont formés par paires symétriquement par rapport à l'axe de chaque ouverture sur des rebords orientés vers l'axe de rotation et faisant saillie dans les ouvertures 38.

A la différence de la rondelle 24 de la figure 4, la rondelle 50 comprend deux paires de bras doubles 54 qui s'étendent radialement de part et d'autre de l'axe de rotation. Chaque paire de bras doubles 54 comporte deux bras parallèles séparés par une fente radiale 56 à extrémités arrondies.

Le volant souple en torsion et en flexion comprenant la rondelle 50 combine les avantages de la présente invention et de celle du document FR-A- 2849683. En effet, ce volant est souple en torsion grâce à ses bras simples 32 ou doubles 54. En flexion, ce volant possède un axe privilégié d'oscillation perpendiculaire à l'axe de rotation du volant, défini par les bras doubles 54 : la raideur en flexion autour de cet axe est plus faible, et la raideur en flexion autour d'un axe perpendiculaire est plus grande car une déformation plus forte se produit dans ce cas au niveau des bras doubles qui opposent une plus grande résistance.

Selon l'enseignement du document cité, cet axe privilégié est positionné angulairement par rapport au vilebrequin dans une position définie par les perçages 28 de passage des vis de fixation, pour donner au volant une souplesse en flexion plus grande en fonction de la position des manetons du vilebrequin. Cet avantage combiné avec la souplesse en torsion est obtenu de manière simple et économique, au moyen d'une même tôle découpée.

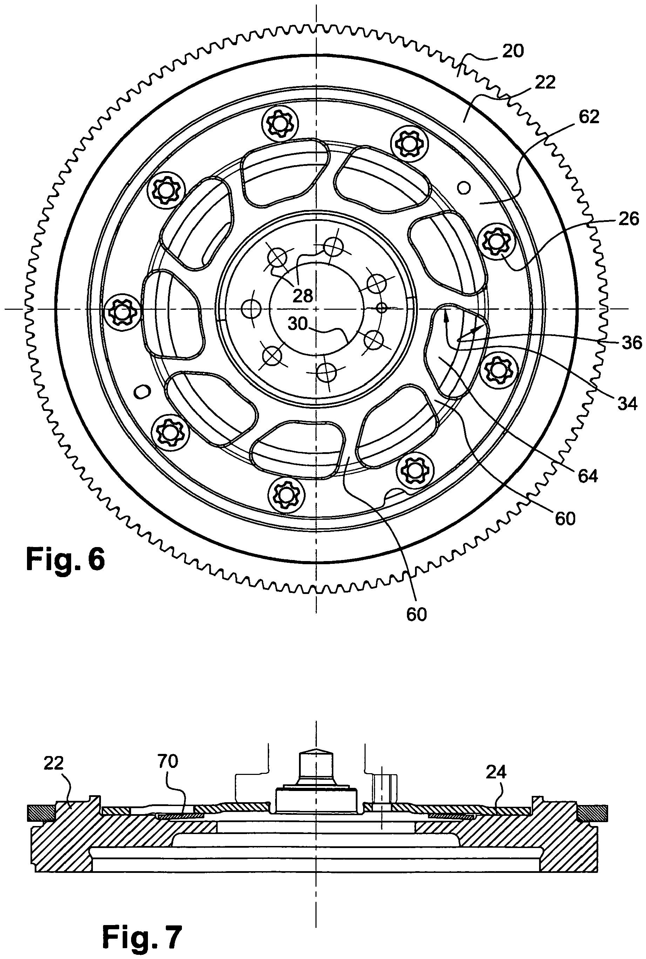

La figure 6 représente une autre variante de réalisation de la rondelle flexible. Selon cette variante, la rondelle 62 du moyen de liaison comprend des ouvertures 64 séparées par des bras 60, un orifice central 30, des perçages 28 de passage des vis de fixation sur le vilebrequin, et des moyens 26 de fixation sur une masse annulaire ou couronne d'inertie 22.

Les bras 60 sont liés aux parties radialement internes et externes de la tôle 62 par des rayons respectivement 34 et 36. A la différence de ceux de la rondelle 24 de la figure 4, les bras 60 sont inclinés par rapport à une direction radiale, dans un plan transversal perpendiculaire à l'axe de rotation. Cette inclinaison permet de réaliser des bras 60 plus longs ce qui donne à ce volant une raideur en flexion et en pompage plus faible. De plus la courbe de raideur en torsion est différente suivant l'application d'un couple positif ou négatif. Une petite dissymétrie dans la courbe permet d'adapter cette raideur au pic de couple fourni par une combustion dans un cylindre du moteur qui est lui-même dissymétrique. On note en outre que la forme inclinée des bras 60 permet de réduire les contraintes issues du couple moteur, dans ces bras 60.

D'une manière générale, un volant souple en torsion et en flexion peut être associé à un moyen d'amortissement des vibrations de flexion et de torsion. La figure 7 représente une première forme de réalisation de ce moyen d'amortissement constitué d'une rondelle Belleville 70 dont la périphérie radialement interne est en appui sur la tôle 24, et dont la périphérie radialement externe est en appui sur la couronne d'inertie 22. Cette rondelle Belleville est précontrainte axialement. Les vibrations en flexion et en pompage induisent des déplacements radiaux des points d'appui et les vibrations en torsion génèrent des déplacements angulaires, ce qui entraîne du frottement qui produit un amortissement utile en particulier pour limiter les grands débattements et réduire les contraintes dans la tôle 24.

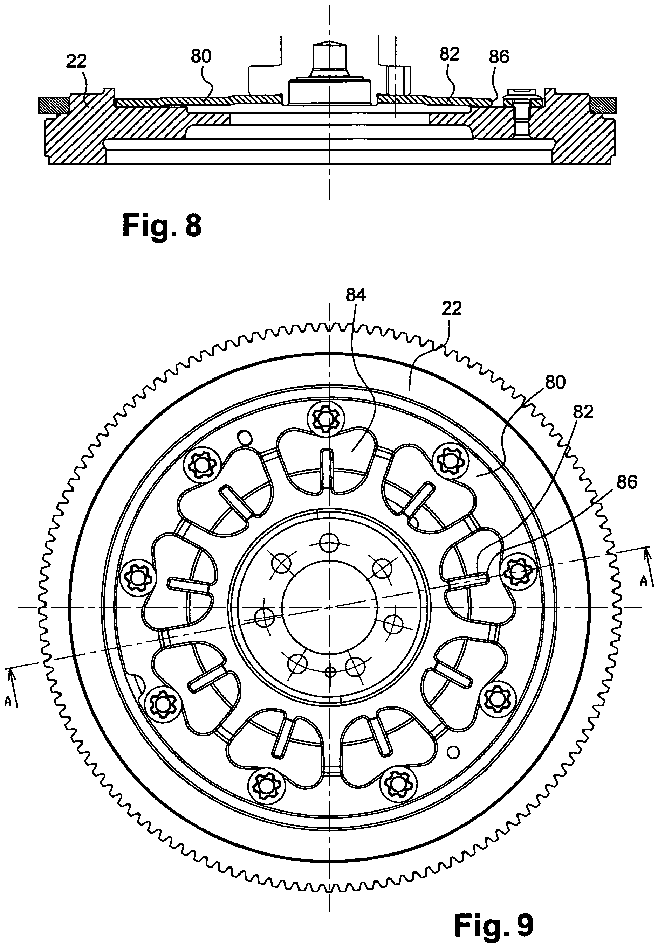

Les figures 8 et 9 représentent une variante des moyens d'amortissement. Dans cette variante, la couronne d'inertie 22 est portée par une tôle 80 souple en flexion et en torsion comportant des ouvertures 84 dont chacune comprend une patte radiale 82 raccordée à sa périphérie intérieure et s'étendant vers l'extérieur. Chaque patte est légèrement cintrée dans un plan passant par l'axe de rotation, de manière à ce que son extrémité libre 86 soit en appui avec une précontrainte élastique sur une face de la couronne 22.

Comme pour la première forme de réalisation, les vibrations en flexion, en pompage et en torsion induisent des frottements des extrémités 88 des pattes radiales 86 sur la couronne d'inertie 22 ce qui génère un amortissement.

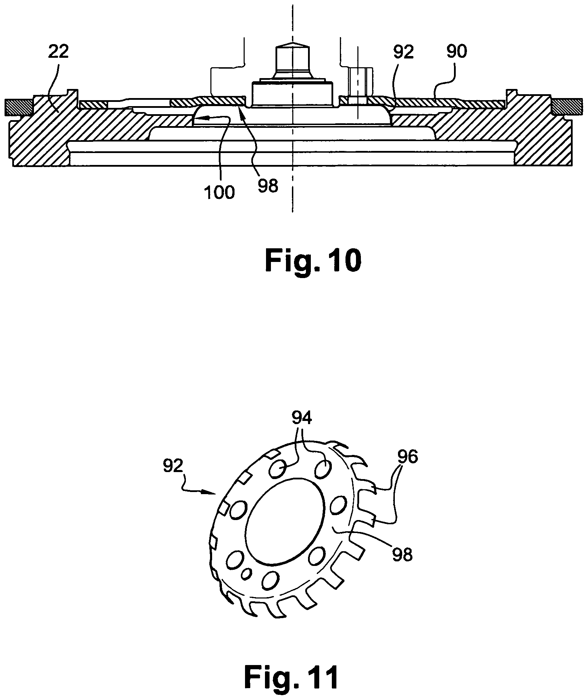

Les figures 10 et 11 représentent des moyens d'amortissement non-conformes à l'invention. La couronne d'inertie 22 est portée par une tôle annulaire 90 souple en flexion et en torsion comportant des ouvertures. Une rondelle d'amortissement 92 comporte une partie radiale plane 98 en appui sur la tôle 90 et maintenue par des vis utilisant des perçages de fixation 94 alignés sur ceux de la tôle 90, pour une fixation de ces deux composants sur l'extrémité du vilebrequin. Dans un autre mode de réalisation, on ajoute une cale entre les têtes de vis de vilebrequin, la tôle annulaire 90 et la partie radiale plane 98 de la rondelle 92.

La périphérie extérieure de la partie plane de la rondelle 92 comporte une série de pattes 96 régulièrement réparties circonférentiellement, incurvées parallèlement à l'axe de rotation. Ces pattes sont en appui radial avec une précontrainte élastique sur la paroi cylindrique d'un alésage central 100 de la couronne d'inertie 22. Cet appui radial génère un frottement et donc un amortissement quand il y a un mouvement relatif entre le moyeu de la tôle 90 et la couronne d'inertie 22, suite à des vibrations de flexion, de pompage ou de torsion. Un avantage de cette réalisation est qu'aucune charge axiale supplémentaire n'est exercée sur la tôle 90 avec des contraintes qui s'ajouteraient à celles dues aux oscillations.

Un volant souple en torsion selon l'invention peut être utilisé comme volant simple portant un mécanisme d'embrayage, ou comme volant primaire d'un double volant amortisseur. D'une manière générale, la rondelle de liaison 24, 50 souple en torsion peut être utilisée pour la liaison entre un vilebrequin et une masse d'inertie en rotation quelconque, comme par exemple un convertisseur de couple hydrodynamique entraînant une transmission automatique. Par ailleurs, le moyen de liaison souple en torsion peut être réalisé autrement qu'en tôle découpée, par exemple par une pièce en fonte comportant des bras à section adaptée.

## Revendications

1. Volant d'inertie apte à être fixé à une extrémité du vilebrequin (4) d'un moteur à combustion interne, comportant une masse annulaire d'inertie en rotation (22) et une rondelle (14) en tôle formée avec une série d'ouvertures (38) réparties circonférentiellement et ayant une raideur en torsion inférieure à la raideur en torsion du vilebrequin (4) seul, de sorte que la fréquence propre en torsion du vilebrequin (4) fixé au volant (1) est diminuée tout en restant supérieure à la première fréquence générée par la succession des combustions dans les cylindres du moteur, lesdites ouvertures (38) ayant globalement la forme d'un trapèze dont les côtés sont reliés entre eux par des rayons de raccordement (34, 36) et présentant une grande base située du côté de la périphérie extérieure de la rondelle (14) **caractérisé en ce que** la masse annulaire d'inertie en rotation (22) est fixée à la rondelle (14) en des zones situées radialement, entre la grande base de chaque ouverture (38) ayant globalement la forme d'un trapèze et la périphérie extérieure de la rondelle (14).

2. Volant d'inertie suivant la revendication 1, **caractérisé en ce que** les ouvertures (38) sont séparées circonférentiellement par des bras (32, 54) radiaux déformables en flexion dans un plan perpendiculaire à l'axe de rotation du volant.

3. Volant d'inertie suivant la revendication 2, **caractérisé en ce que** les zones de fixation de la masse annulaire d'inertie (22) sont situées au moins partiellement sur un rayon inférieur au plus grand rayon des bras (32, 54).

4. Volant d'inertie suivant l'une des revendications 1 à 3, **caractérisé en ce que** la rondelle (24, 50) comprend de 5 à 9 ouvertures.

5. Volant d'inertie suivant l'une des revendications 2 à 4, **caractérisé en ce que** la rondelle en tôle découpée (24, 50) a une épaisseur comprise entre 2 et 6 mm, et **en ce que** les bras (32, 54) ont une largeur comprise entre 4 et 30 mm.

6. Volant d'inertie suivant l'une des revendications précédentes, **caractérisé en ce qu'**il comprend un axe privilégié d'oscillation perpendiculaire à l'axe de rotation, positionné angulairement par rapport au vilebrequin (4), la raideur du volant étant plus faible pour la flexion autour de cet axe.

7. Volant d'inertie suivant la revendication 6, **caractérisé en ce qu'**il comprend deux bras doubles (54) alignés suivant l'axe privilégié d'oscillation et s'étendant radialement de part d'autre de l'axe de rotation.

8. Volant d'inertie suivant la revendication 7, **caractérisé en ce que** les bras doubles (54) comprennent une fente radiale (56) ayant une dimension radiale sensiblement égale à celle des ouvertures (38).

9. Volant d'inertie suivant l'une des revendications 2 à 6, **caractérisé en ce que** la rondelle (62) comporte des bras (60) inclinés par rapport à une direction radiale, dans un plan perpendiculaire à l'axe de rotation.

10. Volant d'inertie suivant l'une des revendications précédentes, **caractérisé en ce qu'**il comporte un moyen d'amortissement des vibrations en torsion et/ou en flexion (70, 82, 92).

11. Volant d'inertie suivant la revendication 10, **caractérisé en ce que** le moyen d'amortissement des vibrations comprend une rondelle Belleville (70) précontrainte axialement entre la rondelle (24) et la masse d'inertie (22).

12. Volant d'inertie suivant la revendication 10, **caractérisé en ce que** le moyen d'amortissement des vibrations comprend des pattes (82) découpées dans la rondelle (80), et faisant saillie dans des ouvertures (84) de cette rondelle pour venir en appui sur la masse d'inertie (22).

13. Volant d'inertie suivant la revendication 10, **caractérisé en ce que** le moyen d'amortissement des vibrations comprend une rondelle (92) comportant une série de pattes (96) incurvées s'étendant parallèlement à l'axe de rotation et qui sont en appui radial avec une précontrainte élastique sur la paroi cylindrique d'un alésage (100) de la masse d'inertie (22).

14. Volant d'inertie suivant l'une des revendications précédentes, **caractérisé en ce que** la fréquence propre d'oscillation en torsion du vilebrequin (4) en ordre de marche et fixé au volant d'inertie (1) est supérieure à 300 Hz.

15. Volant d'inertie suivant l'une des revendications précédentes, **caractérisé en ce qu'**il constitue un volant simple ou un volant primaire d'un double volant amortisseur.

16. Volant d'inertie suivant l'une des revendications précédentes, **caractérisé en ce qu'**il est montable sur un vilebrequin réalisé en fonte.

## Claims

1. Inertia flywheel which can be secured to an end of the crankshaft (4) of an internal combustion engine, comprising an annular mass (22) for inertia in rotation and a sheet metal washer (14) which is formed with a series of openings (38) distributed circumferentially, and having rigidity in torsion which is lower than the rigidity in torsion of the crankshaft (4) alone, such that the own torsion frequency of the crankshaft (4) secured to the flywheel (1) is decreased, whilst remaining greater than the first frequency generated by the succession of the combustions in the cylinders of the engine, the said openings (38) having globally the form of a trapezium, the sides of which are connected to one another by connection radii (34, 36), and having a large base situated on the outer periphery side of the washer (14), **characterised in that** the annular mass (22) for inertia in rotation is secured to the washer (14) in areas situated radially, between the large base of each opening (38) which has globally the form of a trapezium, and the outer periphery of the washer (14).

2. Inertia flywheel according to claim 1, **characterised in that** the openings (38) are separated circumferentially by radial arms (32, 54) which are deformable in flexure on a plane which s perpendicular to the axis of rotation of the flywheel.

3. Inertia flywheel according to claim 2, **characterised in that** the areas for securing of the annular inertia mass (22) are situated at least partially on a radius which is smaller than the largest radius of the arms (32, 54).

4. Inertia flywheel according to one of claims 1 to 3, **characterised in that** the washer (24, 50) comprises from 5 to 9 openings.

5. Inertia flywheel according to one of claims 2 to 4, **characterised in that** the washer (24, 50) made of cut-out sheet metal has a thickness of between 2 and 6 mm, and **in that** the arms (32, 54) have a width of between 4 and 30 mm.

6. Inertia flywheel according to one of the preceding claims, **characterised in that** it comprises a preferential axis of oscillation perpendicular to the axis of rotation, positioned angularly relative to the crankshaft (4), the rigidity of the flywheel being lower for the flexure around this axis.

7. Inertia flywheel according to claim 6, **characterised in that** it comprises two double arms (54) which are aligned according to the preferential axis of oscillation, and extend radially on both sides of the axis of rotation.

8. Inertia flywheel according to claim 7, **characterised in that** the double arms (54) comprise a radial slot (56) with a radial dimension which is substantially equal to that of the openings (38).

9. Inertia flywheel according to one of claims 2 to 6, **characterised in that** the washer (62) comprises arms (60) which are inclined relative to a radial direction, on a plane perpendicular to the axis of rotation.

10. Inertia flywheel according to one of the preceding claims, **characterised in that** it comprises a means for damping vibrations in torsion and/or in flexure (70, 82, 92).

11. Inertia flywheel according to claim 10, **characterised in that** the means for damping vibrations comprises a Belleville washer (70) which is pre-tensioned axially between the washer (24) and the inertia mass (22).

12. Inertia flywheel according to claim 10, **characterised in that** the means for damping vibrations comprises lugs (82) which are cut out in the washer (80), and project into openings (84) in this washer in order to be supported on the inertia mass (22).

13. Inertia flywheel according to claim 10, **characterised in that** the means for damping vibrations comprises a washer (92) comprising a series of curved lugs (96) which extend parallel to the axis of rotation, and are supported radially with resilient pretensioning on the cylindrical wall of a bore (100) in the inertia mass (22).

14. Inertia flywheel according to one of the preceding claims, **characterised in that** the own frequency of oscillation in torsion of the crankshaft (4), in running order and secured to the inertia flywheel (1), is greater than 300 Hz.

15. Inertia flywheel according to one of the preceding claims, **characterised in that** it constitutes a simple flywheel or a primary flywheel of a double damping flywheel.

16. Inertia flywheel according to one of the preceding claims, **characterised in that** it can be fitted on a crankshaft which is made of cast iron.

## Patentansprüche

1. Schwungrad, das dazu geeignet ist, an einem Ende einer Kurbelwelle (4) eines Verbrennungsmotors befestigt zu werden, umfassend eine ringförmige Rotationsschwungmasse (22) und eine Scheibe (14) aus Blech, die mit einer Reihe umfangsmäßig verteilter Öffnungen (38) ausgebildet ist und eine Verwindungssteifigkeit hat, die kleiner ist als die Verwindungssteifigkeit der Kurbelwelle (4) alleine, so dass die Torsions-Eigenfrequenz der am Schwungrad (1) befestigten Kurbelwelle (4) verringert ist, während sie größer als die erste von der Abfolge der Verbrennungen in den Zylindern des Motors hervorgerufenen Frequenz ist, wobei die Öffnungen (38) im Wesentlichen die Form von einem Trapez haben dessen Seiten miteinander durch Anschlussradien (34, 36) verbunden sind und eine große Grundseite aufweisen, die auf der Seite des äußeren Umfangs der Scheibe (14) angeordnet ist, **dadurch gekennzeichnet, dass** die Rotationsschwungmasse (22) an der Scheibe (14) in Bereichen befestigt ist, die radial zwischen der große Grundseite jeder trapezförmigen Öffnung (38) und dem äußeren Umfang der Scheibe (14) liegen.

2. Schwungrad nach Anspruch 1, **dadurch gekennzeichnet, dass** die Öffnungen (38) umfangsmäßig durch radiale Arme (32, 54) getrennt sind, die in einer senkrecht zur Rotationsachse des Schwungrads verlaufende Ebene durch Biegung verformbar sind.

3. Schwungrad nach Anspruch 2, **dadurch gekennzeichnet, dass** die Befestigungsbereiche der ringförmigen Schwungmasse (22) zumindest teilweise auf einem Radius angeordnet sind, der kleiner ist als der größte Radius der Arme (32, 54).

4. Schwungrad nach einem der Ansprüche 1 bis 3, **dadurch gekennzeichnet, dass** die Scheibe (24, 50) fünf bis neun Öffnungen umfasst.

5. Schwungrad nach einem der Ansprüche 2 bis 4, **dadurch gekennzeichnet, dass** die aus Bleich gestanzte Scheibe (24, 50) eine zwischen 2 und 6 mm liegende Dicke hat, und dass die Arme (32, 54) eine zwischen 4 und 30 mm liegende Länge haben.

6. Schwungrad nach einem der vorrangehenden Ansprüche, **dadurch gekennzeichnet, dass** es eine bevorzugte Schwingungsachse umfasst, die senkrecht zur Rotationsachse und winklig relativ zur Kurbelwelle (4) liegt, wobei die Steifigkeit des Schwungrads für die Biegung um diese Achse geringer ist.

7. Schwungrad nach Anspruch 6, **dadurch gekennzeichnet, dass** es zwei Doppelarme (54) umfasst, die entlang der bevorzugten Schwingungsachse ausgerichtet sind und sich radial zu beiden Seiten der Rotationsachse erstrecken.

8. Schwungrad nach Anspruch 7, **dadurch gekennzeichnet, dass** die Doppelarme (54) einen radialen Schlitz (56) umfassen, dessen radiale Abmessung in etwa gleich wie die der Öffnungen (38) ist.

9. Schwungrad nach einem der Ansprüche 2 bis 6, **dadurch gekennzeichnet, dass** die Scheibe (62) Arme (60) umfasst, die in einer senkrecht zur Rotationsachse verlaufenden Ebene relativ zu einer radialen Ausrichtung geneigt sind.

10. Schwungrad nach einem der vorangehenden Ansprüche, **dadurch gekennzeichnet, dass** es ein Mittel zur Dämpfung von Torsions- und/oder Biegeschwingungen (70, 82, 92) umfasst.

11. Schwungrad nach Anspruch 10, **dadurch gekennzeichnet, dass** das Mittel zur Dämpfung der Schwingungen eine Tellerfeder (70) umfasst, die axial zwischen der Scheibe (24) und der Schwungmasse (22) vorgespannt ist.

12. Schwungrad nach Anspruch 10, **dadurch gekennzeichnet, dass** das Mittel zur Dämpfung der Schwingungen Laschen (82) umfassen, die aus der Scheibe (80) ausgeschnitten sind und Vorsprünge in den Öffnungen (84) dieser Scheibe bilden, um auf der Schwungmasse (22) in Auflage zu kommen.

13. Schwungrad nach Anspruch 10, **dadurch gekennzeichnet, dass** das Mittel zur Dämpfung von Schwingungen eine Scheibe (92) umfasst, die eine Reihe von gekrümmten Laschen (96) umfasst, welche sich parallel zur Rotationsachse erstrecken und mit einer elastischen Vorspannung in radialer Auflage auf einer zylindrischen Wand einer Bohrung (100) der Schwungmasse (22) sind.

14. Schwungrad nach einem der vorangehenden Ansprüche, **dadurch gekennzeichnet, dass** die Eigenfrequenz der Torsionsschwingungen der betriebsbereiten und am Schwungrad (1) befestigten Kurbelwelle (4) größer als 300 Hz ist.

15. Schwungrad nach einem der vorangehenden Ansprüche, **dadurch gekennzeichnet, dass** es ein Einfachschwungrad oder ein Primärschwungrad eines Zweimassen-Dämpfungsschwungrades bildet.

16. Schwungrad nach einem der vorangehenden Ansprüche, **dadurch gekennzeichnet, dass** es an einer aus Gusseisen ausgeführten Kurbelwelle montierbar ist.
